(19) 
Europäisches Patentamt
European Patent Office
Office européen des brevets

(11) **EP 4 640 359 A1**

(12) **EUROPEAN PATENT APPLICATION**
published in accordance with Art. 153(4) EPC

(43) Date of publication:
**29.10.2025 Bulletin 2025/44**

(21) Application number: **23906920.6**

(22) Date of filing: **15.12.2023**

(51) International Patent Classification (IPC):
***B23K 11/16*** (2006.01)      ***B23K 11/11*** (2006.01)

(52) Cooperative Patent Classification (CPC):
**B23K 11/11; B23K 11/16**

(86) International application number:
**PCT/JP2023/045036**

(87) International publication number:
**WO 2024/135558 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022  JP 2022206636**

(71) Applicant: NIPPON STEEL CORPORATION
Chiyoda-ku
Tokyo 100-8071 (JP)

(72) Inventors:
• **FURUSAKO, Seiji**
  **Tokyo 100-8071 (JP)**
• **KODAMA, Shinji**
  **Tokyo 100-8071 (JP)**

(74) Representative: **Vossius & Partner
Patentanwälte Rechtsanwälte mbB
Siebertstrasse 3
81675 München (DE)**

(54) **SPOT-WELDED JOINT, METHOD FOR MANUFACTURING SPOT-WELDED JOINT, AND
AUTOMOBILE COMPONENT**

(57)    A spot-welded joint according to an aspect of the present invention includes: a plurality of steel sheets, one or more of the plurality of steel sheets being a high strength steel sheet having a tensile strength of 980 MPa or more; a weld; and a zinc-based-plated layer disposed at least on an overlapping surface of the steel sheets and being in contact with one or more high strength steel sheets, in which the diameter of the nugget is $4.0\sqrt{T_{ave}}$ or more, $T_{ave}$ being a value obtained by dividing the total thickness in units of mm of the plurality of steel sheets by 2, the concentration of B atoms at a prior austenite grain boundary of the high strength steel sheet in contact with the zinc-based-plated layer at an outside of the weld is 2.0 atm% or more, the average effective grain size of the high strength steel sheet in contact with the zinc-based-plated layer at the outside of the weld is 7.0 μm or less, and the average effective grain size of the heat-affected zone of the high strength steel sheet at an outer end portion of the corona bond formed on the overlapping surface on which the zinc-based-plated layer is disposed and a circumferential edge portion of an indentation formed on a surface on which the zinc-based-plated layer is disposed is 15.0 μm or less.

FIG. 1A

FIG. 1B

**(Cont. next page)**

# FIG. 1C

**Description**

TECHNICAL FIELD

The present invention relates to a spot-welded joint, a method for manufacturing a spot-welded joint, and a vehicle component.

Priority is claimed on Japanese Patent Application No. 2022-206636, filed December 23, 2022, the content of which is incorporated herein by reference.

BACKGROUND ART

A zinc-based-plated layer has a function of dramatically improving corrosion resistance of a steel material by a sacrificial anticorrosion effect. Therefore, the zinc-based-plated layer is used as a surface treatment layer of various steel materials.

For example, Patent Document 1 discloses a Zn-Al-Mg-based plated steel sheet having a tensile strength of 590 MPa or more and a yield ratio of less than 0.7, in which a base steel sheet contains, by mass%, C: 0.05 to 0.25%, Si: 1.5% or less, Mn: 1 to 2%, N: 0.005% or less, Ti: $3.43 \times N$ to 0.05%, B: 0.0003 to 0.01%, Cr: 0.5 to 2%, and as necessary, one or more of Nb: 0.3% or less, V: 1% or less, Mo: 1% or less, and Zr: 1% or less with the balance being Fe and inevitable impurities, and has a composition of Mn + 1.29Cr $\geq$ 2.05, the base steel sheet includes a ferrite + 5 vol% or more martensite, and Mn segregation of the base steel sheet is in a range satisfying Mn maximum concentration (mass%)/Mn minimum concentration (mass%) $\leq$ 2.

Patent Document 2 discloses a hot-dip galvanized steel sheet including a hot-dip galvanized layer on at least one surface of a base steel sheet, in which the base steel sheet has a predetermined composition and contains, in volume fraction, ferrite: 0% to 50%, residual austenite: 0% to 30%, tempered martensite: 5% or more, fresh martensite: 0% to 10%, and a total of pearlite and cementite: 0% to 5%, the remainder in microstructure is composed of bainite when the remainder in microstructure is present, the concentration of B atoms at a prior austenite grain boundary is 2.0 atm% or more, and the average effective grain size is 7.0 $\mu$m or less.

Patent Document 3 discloses a high strength steel sheet containing C, Si, Mn, P, S, Al, and N, having a composition in which [%Si], [%Mn], [%P], [%Mo], and [%Cr] satisfy a predetermined relationship, with the balance being Fe and inevitable impurities, having ferrite, tempered martensite, bainite, quenched martensite, and residual austenite, having a steel structure in which an amount of diffusible hydrogen in the steel sheet is 0.60 ppm by mass or less, a surface layer softening thickness is 5 $\mu$m or more and 150 $\mu$m or less, and a frequency of coincidence grain boundaries in the surface layer of the steel sheet after a high-temperature tensile test is 0.45 or less, and having a tensile strength of 1180 MPa or more.

Patent Document 4 discloses a spot welding member obtained by performing spot welding on a plurality of steel sheets in which at least one of the plurality of steel sheets is a high-strength cold-rolled steel sheet having no plated layer on a surface and having a tensile strength of 780 MPa or more, at least one of the plurality of steel sheets is a zinc-based-plated steel sheet having a zinc-based-plated layer on a surface, and a surface layer Zn concentration inside a corona bond of a spot-welding portion is 1 mass% or more and less than 25 mass%.

Citation List

Patent Documents

Patent Document 1: Japanese Unexamined Patent Application, First Publication No. 2009-228079
Patent Document 2: PCT International Publication No. WO 2020/162561
Patent Document 3: PCT International Publication No. WO 2021/019947
Patent Document 4: Japanese Unexamined Patent Application, First Publication No. 2020-179413

SUMMARY OF INVENTION

Technical Problem

Liquid metal embrittlement (LME) cracking is a problem during welding of zinc-based-plated steel sheets. Zn, which is a main component of the zinc-based-plated layer, is melted by welding heat, diffuses into the grain boundaries of the steel sheet, and embrittles the grain boundaries. Tensile stress is introduced into the weld heated by welding heat due to thermal shrinkage of the base metal and the weld metal due to temperature decrease. LME cracking is a phenomenon in which grain boundaries embrittled by molten zinc are broken by tensile stress (or tensile strain) introduced into a weld.

Even in a bare steel sheet, that is, a steel sheet having no plated layer, LME cracking may occur when the steel sheet is stacked and welded with a zinc-based-plated steel sheet. This is because when welding heat is applied to the bare steel sheet in a state where the zinc-based-plated layer is in contact with the bare steel sheet, molten zinc diffuses into grain boundaries of the bare steel sheet. In Patent Document 4, LME cracking occurring in a steel sheet having no zinc-based-plated layer is referred to as "extrinsic LME cracking".

According to the Zn-Al-Mg-based steel sheet disclosed in Patent Document 1, it is considered that molten metal embrittlement cracking can be stably suppressed even under severe welding conditions. Patent Document 1 describes that B is segregated at a grain boundary to increase an interatomic bonding force, thereby suppressing molten metal embrittlement cracking. However, the grain size, the welding conditions, and the like for suppressing LME cracking are not studied at all in Patent Document 1.

According to the hot-dip galvanized steel sheet disclosed in Patent Document 2, it is considered that press formability and hydrogen embrittlement resistance after deformation processing are improved. However, in Patent Document 2, LME cracking is not studied at all.

The high strength steel sheet disclosed in Patent Document 3 is considered to have excellent LME resistance characteristics. Patent Document 3 discloses that the LME resistance characteristics are improved by controlling the frequency of coincidence grain boundaries in the surface layer of the steel sheet after the high-temperature tensile test to 0.45 or less and controlling the surface layer softening thickness to 5 $\mu$m or more and 150 $\mu$m or less. However, the grain boundary characteristics, the grain size of the weld, the welding conditions, and the like for suppressing LME cracking are not studied at all in Patent Document 3.

In the spot-welding member disclosed in Patent Document 4, it is considered that the extrinsic LME cracking can be suppressed. Patent Document 4 discloses that occurrence of extrinsic LME cracking can be suppressed by controlling the concentration of Zn on the surface layer in the corona bond of the spot-welding portion. However, in Patent Document 4, the concentration of Zn in the surface layer inside the corona bond needs to be within a predetermined range, and the components of the zinc-based-plated layer are limited. Patent Document 4 has not studied any LME cracking suppression technique capable of suppressing LME cracking regardless of the components of the zinc-based-plated layer.

In view of the above circumstances, an object of the present invention is to provide a spot-welded joint having a high joining strength and suppressed in LME cracking, a method for manufacturing the same, and a vehicle component suppressed in LME cracking. Solution to Problem

The gist of the present invention is as follows.

(1) A spot-welded joint according to an aspect of the present invention includes: a plurality of stacked steel sheets, one or more of the plurality of steel sheets being a high strength steel sheet having a tensile strength of 980 MPa or more; a weld including a nugget joining the steel sheets, and a heat-affected zone and a corona bond around the nugget; and a zinc-based-plated layer disposed at least on an overlapping surface of the steel sheets and being in contact with one or more high strength steel sheets, in which the diameter of the nugget is 4.0√Tave or more, Tave being a value obtained by dividing the total thickness in units of mm of the plurality of steel sheets by 2, the concentration of B atoms at a prior austenite grain boundary of the high strength steel sheet in contact with the zinc-based-plated layer at an outside of the weld is 2.0 atm% or more, the average effective grain size of the high strength steel sheet in contact with the zinc-based-plated layer at the outside of the weld is 7.0 $\mu$m or less, and the average effective grain size of the heat-affected zone of the high strength steel sheet at an outer end portion of the corona bond formed on the overlapping surface on which the zinc-based-plated layer is disposed and a circumferential edge portion of an indentation formed on a surface on which the zinc-based-plated layer is disposed is 15.0 $\mu$m or less.

(2) Preferably, in the spot-welded joint described in (1), the diameter of the heat-affected zone as measured at the overlapping surface of the steel sheets is 1.30 times or less the diameter of the nugget.

(3) A method for manufacturing a spot-welded joint according to another aspect of the present invention includes: a main energizing, in which a welding current is applied to a pair of electrodes sandwiching a plurality of stacked steel sheets, one or more of the plurality of steel sheets being a high strength steel sheet having a tensile strength of 980 MPa or more, a zinc-based-plated layer being disposed on surfaces of the one or more of the steel sheets, the zinc-based-plated layer being disposed at least on an overlapping surface of the steel sheets, and the zinc-based-plated layer being in contact with the one or more high strength steel sheets; and retaining a pressurizing force on the steel sheet by the pair of electrodes in a state where energization to the pair of electrodes is stopped, in which the concentration of B atoms at a prior austenite grain boundary of the high strength steel sheet in contact with the zinc-based-plated layer is 2.0 atm% or more, the average effective grain size of the high strength steel sheet in contact with the zinc-based-plated layer is 7.0 $\mu$m or less, and Formulas 1, 2, and 3 are satisfied:

$$0.13 \times \text{Tave} \leq \text{tw} \leq 0.17 \times \text{Tave} \quad (\text{Formula 1})$$

$$1.90 \leq \text{Iw} \times \text{tw} \leq 2.24 \quad (\text{Formula 2})$$

$$2400 \times \text{Tave} \leq \text{Pw} \quad (\text{Formula 3})$$

where Tave is a value obtained by dividing the total thickness in units of mm of the plurality of steel sheets by 2, tw is an energizing time in units of s in the main energizing, Iw is a welding current value in units of kA in the main energizing, and Pw is a pressurizing force in units of N in the main energizing.

(4) Preferably, in the method for manufacturing a spot-welded joint described in (3), a retention time th in the retaining satisfies Formula 4:

$$0.08 \times \text{Tave}^2 \leq \text{th} \leq 0.42 \times \text{Tave}^2 \quad (\text{Formula 4})$$

where th is a retention time in the retaining , and Tave is a value obtained by dividing the total thickness in units of mm of the plurality of steel sheets by 2.

(5) Preferably, in the method for manufacturing a spot-welded joint described in (3) or (4), the main energizing is pulse energization.

(6) A vehicle component according to another aspect of the present invention includes the spot-welded joint described in (1) or (2).

Advantageous Effects of Invention

According to the present invention, it is possible to provide a spot-welded joint having a high joining strength and suppressed in LME cracking, a method for manufacturing the same, and a vehicle component suppressed in LME cracking.

BRIEF DESCRIPTION OF DRAWINGS

[FIG. 1A] A cross-sectional view of an example of a spot-welded joint.
[FIG. 1B] A cross-sectional view of an example of the spot-welded joint.
[FIG. 1C] A cross-sectional view of an example of the spot-welded joint.
[FIG. 2] An enlarged view of an outer end portion of a corona bond surrounded by a broken line in FIG. 1A.
[FIG. 3] An enlarged view of a circumferential edge portion of an indentation surrounded by a broken line in FIG. 1C.
[FIG. 4A] A cross-sectional view showing a position where an effective grain size is measured.
[FIG. 4B] A cross-sectional view showing a position where an effective grain size is measured.
[FIG. 5] A photograph of B atoms enriched at a prior austenite grain boundary in a heat-affected zone, obtained by SIMS analysis.

DESCRIPTION OF EMBODIMENTS

(1. Spot-welded joint 1)

A spot-welded joint 1 according to a first embodiment of the present invention includes: a plurality of stacked steel sheets 10, one or more of the plurality of steel sheets 10 being a high strength steel sheet 10H having a tensile strength of 980 MPa or more; a weld 12 including a nugget 121 joining the steel sheets 10, and a heat-affected zone 123 and a corona bond 122 around the nugget 121; and a zinc-based-plated layer 11 disposed at least on an overlapping surface of the steel sheets 10 and being in contact with one or more high strength steel sheets 10H, in which a diameter $d_n$ of the nugget 121 is 4.0√Tave or more, Tave being a value obtained by dividing the total thickness in units of mm of the plurality of steel sheets 10 by 2, the concentration of B atoms at a prior austenite grain boundary of the high strength steel sheet 10H in contact with the zinc-based-plated layer 11 at an outside of the weld 12 is 2.0 atm% or more, the average effective grain size of the high strength steel sheet 10H in contact with the zinc-based-plated layer 11 at the outside of the weld 12 is 7.0 μm or less, and the average effective grain size of the heat-affected zone 123 of the high strength steel sheet 10H at an outer end portion of the corona bond 122 formed on the overlapping surface on which the zinc-based-plated layer 11 is disposed and a circumferential edge portion of an indentation 124 formed on a surface on which the zinc-based-plated layer 11 is disposed is 15.0 μm or less.

(Steel sheet 10 and weld 12)

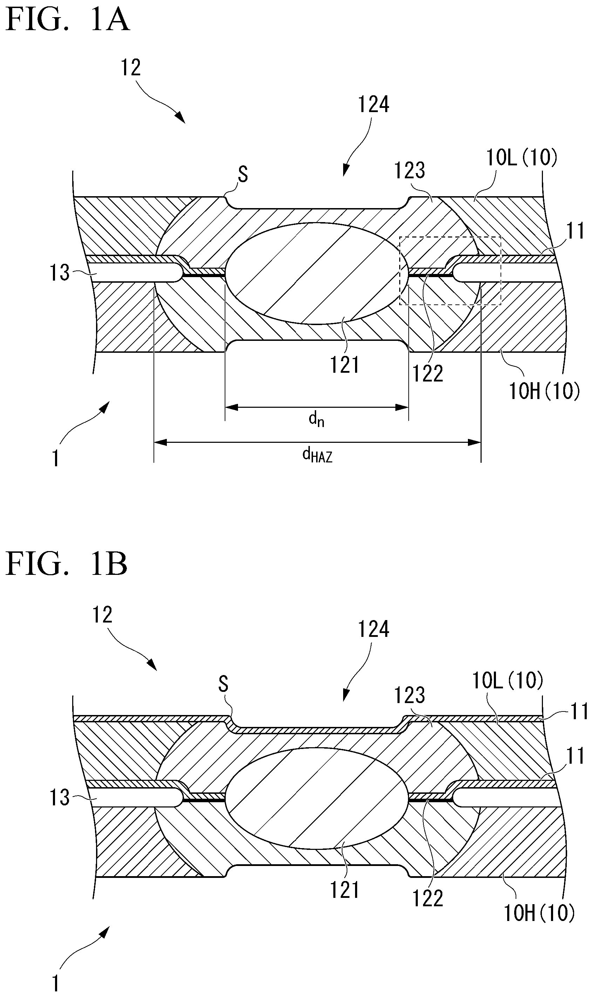

In the spot-welded joint 1 according to the first embodiment, as illustrated in FIGS. 1A to 1C, the plurality of steel sheets 10 are stacked. Although the spot-welded joint 1 of FIGS. 1A to 1C is configured by two steel sheets 10, the spot-welded joint 1 may include three or more steel sheets 10.

The spot-welded joint 1 according to the first embodiment has the weld 12. The weld 12 includes the nugget 121, the heat-affected zone 123, the corona bond 122, and the indentation 124. The meanings of the terms "nugget", "heat-affected zone", and "corona bond" are in accordance with JIS Z 3001-1:2018 "Welding and allied processes-Vocabulary-Part 1: General" and JIS Z 3001-6:2013 "Welding and allied processes-Vocabulary-Part 6: Resistance welding". That is, the nugget 121 is a melted and solidified portion formed in the weld 12. The nugget 121 joins the steel sheets 10. The heat-affected zone 123 is a portion of a base metal that is not melted and has a microstructure, a metallurgical property, a mechanical property, and the like changed by welding heat. Therefore, the steel sheets 10 included in the spot-welded joint 1 are the heat-affected zone 123 around the nugget 121. The corona bond 122 is a solid-phase-welded ring-shaped portion generated around the nugget 121. The heat-affected zone 123 and the corona bond 122 are generated around the nugget 121. The indentation 124 is an indentation on the surface of the base metal caused by an electrode tip as a result of spot welding.

(Zinc-based-plated layer 11)

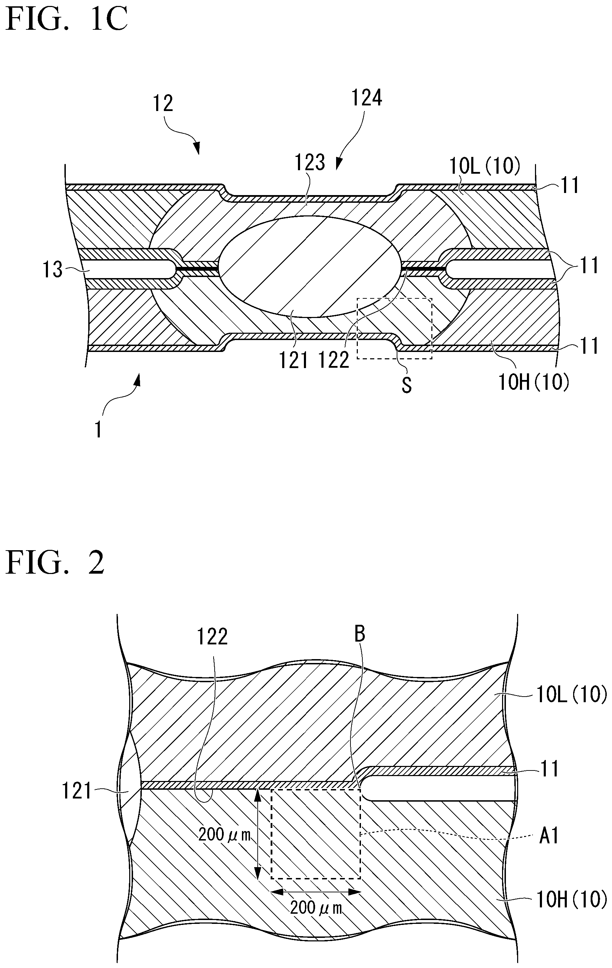

The spot-welded joint 1 according to the present embodiment has the zinc-based-plated layer 11. In other words, one or more of the steel sheets 10 included in the spot-welded joint 1 are zinc-based-plated steel sheets having the zinc-based-plated layer 11 on one or both surfaces. For example, in the spot-welded joint 1 illustrated in FIG. 1A, the zinc-based-plated layer 11 is provided on one surface of a low strength steel sheet 10L that is the upper steel sheet 10. In the spot-welded joint 1 illustrated in FIG. 1B, the zinc-based-plated layer 11 is provided on both surfaces of the low strength steel sheet 10L that is the upper steel sheet 10. In the spot-welded joint 1 illustrated in FIG. 1C, the zinc-based-plated layer 11 is formed on both surfaces of the low strength steel sheet 10L that is the upper steel sheet 10 and on both surfaces of the high strength steel sheet 10H that is the lower steel sheet 10.

The zinc-based-plated layer 11 is a plated layer containing zinc as a main component, that is, a plated layer having a chemical composition in which a Zn content is 50 mass% or more. Examples of the zinc-based-plated layer 11 include pure galvanizing layer, hot-dip galvanizing layer, electro-galvanizing layer, and alloying hot-dip galvanizing layer. The zinc-based-plated layer 11 has a function of enhancing corrosion resistance of the spot-welded joint 1 by a sacrificial anticorrosion effect.

(High strength steel sheet 10H)

One or more of the steel sheets 10 included in the spot-welded joint 1 are the high strength steel sheet 10H having a tensile strength of 980 MPa or more. All of the steel sheets 10 included in the spot-welded joint 1 may be the high strength steel sheet 10H. On the other hand, in the spot-welded joint 1, the high strength steel sheet 10H and the low strength steel sheet 10L having a tensile strength of less than 980 MPa may be combined. In the spot-welded joint 1 illustrated in FIGS. 1A to 1C, the high strength steel sheet 10H and the low strength steel sheet 10L are stacked and joined.

(Arrangement of zinc-based-plated layer 11)

The zinc-based-plated layer 11 may be formed on the surface of the high strength steel sheet 10H or the surface of the low strength steel sheet 10L. For example, in the spot-welded joint illustrated in FIG. 1A, the zinc-based-plated layer 11 is disposed only on one surface (overlapping surface side) of the low strength steel sheet 10L. In the spot-welded joint illustrated in FIG. 1B, the zinc-based-plated layer 11 is disposed only on both surfaces of the low strength steel sheet 10L. In the spot-welded joint 1 illustrated in FIG. 1C, the zinc-based-plated layer 11 are provided on the surfaces of both the low strength steel sheet 10L and the high strength steel sheet 10H.

One or more high strength steel sheets 10H included in the spot-welded joint 1 are in contact with the zinc-based-plated layer 11. Here, "the high strength steel sheet 10H is in contact with the zinc-based-plated layer 11" is a concept including the following two cases.

(1) the zinc-based-plated layer 11 is present on the surface of the high strength steel sheet 10H.
(2) The high strength steel sheet 10H having no zinc-based-plated layer 11 on the surface and the zinc-based-plated steel sheet are stacked in contact with each other.

Here, a "steel sheet having the zinc-based-plated layer 11 on the surface of the high strength steel sheet 10H" in (1) means that the steel sheet is substantially a zinc-based-plated steel sheet. The steel sheet 10 itself is a portion of a base steel sheet of a zinc-based-plated steel sheet, and the zinc-based-plated layer 11 means a zinc-based-plated layer of the zinc-based-plated steel sheet. For example, the lower side of the spot-welded joint 1 of FIG. 1C has the zinc-based-plated layer 11 on the surface of the high strength steel sheet 10H and is a substantially zinc-based-plated steel sheet.

A specific example of (2) is, for example, the lower sheet of FIG. 1A. This lower sheet is not a so-called zinc-based-plated steel sheet, and there is no zinc-based-plated layer 11 on the surface. However, the upper sheet of the overlapping counterpart is a zinc-based-plated steel sheet, that is, a steel sheet having a zinc-based plating on the surface thereof. Therefore, the lower sheet of FIG. 1A, that is, the high strength steel sheet 10H having no zinc-based-plated layer 11 on the surface and the zinc-based-plated steel sheet are stacked in contact with each other.

In either case of the above (1) and (2), molten zinc is formed on the surface of the heat-affected zone 123 of the high strength steel sheet 10H at the time of spot welding. In the present embodiment, it is not necessary for all the high strength steel sheets 10H to be in contact with the zinc-based-plated layer 11. For example, when two or more high strength steel sheets 10H are included in the plate assembly, at least one high strength steel sheet 10H may be in contact with the zinc-based-plated layer 11.

In the present embodiment, the zinc-based-plated layer 11 is disposed on the overlapping surface of at least two steel sheets 10. When the spot-welded joint 1 has two or more overlapping surfaces, the zinc-based-plated layer 11 is disposed on at least one overlapping surface. The zinc-based-plated layer 11 may be further disposed on one or both surfaces of the spot-welded joint 1.

(Diameter $d_n$ of nugget 121)

In the spot-welded joint 1 according to the present embodiment, the diameter $d_n$ of the nugget 121 is $4.0\sqrt{Tave}$ or more. Tave is a value obtained by dividing the total thickness in units of mm of the plurality of steel sheets 10 by 2. The diameter $d_n$ of the nugget 121 is measured along the overlapping surface of the steel sheets 10 in the cross section of the spot-welded joint 1, as illustrated in FIG. 1A. When the number of the steel sheets 10 is 3 or more and the number of the overlapping surfaces (joining interfaces) of the steel sheets 10 is 2 or more, the diameters $d_n$ of all the nuggets 121 are $4.0\sqrt{Tave}$ or more. In other words, when the number of the steel sheets 10 is 3 or more and the number of the overlapping surfaces (joining interfaces) of the steel sheets 10 is 2 or more, the smallest diameter $d_n$ among the diameters $d_n$ of the plurality of nuggets 121 is $4.0\sqrt{Tave}$ or more.

By setting the diameter $d_n$ of the nugget 121 to $4.0\sqrt{Tave}$ or more, the joining strength of the spot-welded joint can be secured. The diameter $d_n$ of the nugget 121 may be $4.2\sqrt{Tave}$ or more, $4.5\sqrt{Tave}$ or more, or $5.0\sqrt{Tave}$ or more. Although it is not necessary to define the upper limit of the diameter $d_n$ of the nugget 121, the diameter $d_n$ of the nugget 121 may be $7.0\sqrt{Tave}$ or less, $6.5\sqrt{Tave}$ or less, or $6.0\sqrt{Tave}$ or less.

(Concentration of B atoms at prior austenite grain boundary in base material portion of high strength steel sheet 10H in contact with zinc-based-plated layer 11)

As described above, in the steel sheet 10, a region around the nugget 121 is the heat-affected zone 123. Therefore, a part of the steel sheet 10 is included in the weld 12, and its microstructure, metallurgical property, mechanical property, and the like are different from those before welding. On the other hand, the microstructure, metallurgical property, mechanical property, and the like in a region outside the weld 12 in the steel sheet 10 are substantially the same as those before welding. In the present embodiment, the region outside the weld 12 may be referred to as a base material portion.

In the base material portion of the high strength steel sheet 10H in contact with the zinc-based-plated layer 11, the concentration of B atoms at the prior austenite grain boundary is 2.0 atm% or more. In the base material portion of the high strength steel sheet 10H in contact with the zinc-based-plated layer 11, the concentration of B atoms at the prior austenite grain boundary is more preferably 2.2 atm% or more, 2.5 atm% or more, or 3.0 atm% or more. In the base material portion of the high strength steel sheet 10H in contact with the zinc-based-plated layer 11, the upper limit of the concentration of B atoms at the prior austenite grain boundary is not particularly limited, but from the viewpoint of preventing excessive hardening of the high strength steel sheet 10H in contact with the zinc-based-plated layer 11, for example, the B atomic concentration is more preferably 7.0 atm% or less, 6.0 atm% or less, or 5.0 atm% or less. The concentration of B atoms at the prior austenite grain boundary can be specified by a STEM-EELS method described later.

The prior austenite grain boundary is a trace of a grain boundary of austenite which is a high-temperature microstructure. The high strength steel sheet 10H is once heated to an austenite temperature range in the manufacturing process thereof, and is cooled to room temperature after the metallographic structure thereof is mainly austenitic. Some or all of austenite is transformed into a microstructure such as martensite and disappears by cooling, but grain boundaries of austenite grains remain in the high strength steel sheet 10H after the microstructure transformation. This remaining grain boundary is referred to as a prior austenite grain boundary. Molten zinc is likely to diffuse into the prior austenite grain boundary. Therefore, the prior austenite grain boundary is a region where LME cracking is likely to occur.

(Average grain size in base material portion of high strength steel sheet 10H in contact with zinc-based-plated layer 11)

The average effective grain size in the base material portion of the high strength steel sheet 10H in contact with the zinc-based-plated layer 11 is 7.0 $\mu$m or less. As a result, hydrogen embrittlement of the high strength steel sheet 10H in contact with the zinc-based-plated layer 11 is improved, and delayed fracture resistance property of the spot-welded joint 1 is improved. The average effective grain size is the average grain size of grains when a region surrounded by a grain boundary having an orientation difference of 15 degrees or more is defined as a grain. The average effective grain size of the high strength steel sheet 10H in contact with the zinc-based-plated layer 11 at the outside of the weld 12 can be specified using EBSD described later.

The average effective grain size in the base material portion of the high strength steel sheet 10H in contact with the zinc-based-plated layer 11 is more preferably 6.5 $\mu$m or less, 6.0 $\mu$m or less, 5.5 $\mu$m or less, or 5.0 $\mu$m or less. The lower limit of the average effective grain size in the base material portion of the high strength steel sheet 10H in contact with the zinc-based-plated layer 11 is not particularly limited, but from the viewpoint of enhancing the production efficiency of the high strength steel sheet 10H, the average effective grain size is preferably 2.0 $\mu$m or more, 2.5 $\mu$m or more, or 3.0 $\mu$m or more.

The type of the grains is not particularly limited. As described later, what affects LME cracking resistance is not the type of grains but the amount of grain boundaries. The grains are, for example, ferrite, martensite, residual austenite, and the like.

(LME occurrence region)

In the spot-welded joint 1 according to the first embodiment, LME cracking may occur in the heat-affected zone 123 of the high strength steel sheet 10H at an outer end portion B of the corona bond 122 on the overlapping surface on which the zinc-based-plated layer is disposed.

When the zinc-based-plated layer 11 in contact with the high strength steel sheet 10H is disposed on the surface in addition to the overlapping surface, the circumferential edge portion of the indentation on the surface on which the zinc-based-plated layer in contact with the high strength steel sheet 10H is disposed becomes the heat-affected zone 123, and LME cracking may occur.

Therefore, in the following description, for convenience, the following (1) and (2) in the high strength steel sheet 10H are referred to as LME occurrence regions. The following (1) is also referred to as an LME occurrence region (1), and the following (2) is also referred to as an LME occurrence region (2):

(1) the outer end portion B of the corona bond 122 in the overlapping surface on which the zinc-based-plated layer 11 is disposed; and
(2) the circumferential edge portion of the indentation 124 on the surface on which the zinc-based-plated layer 11 is disposed.

Both of (1) and (2) of the high strength steel sheet 10H are sites where stress is likely to concentrate and LME cracking is likely to occur in the process of cooling the spot-welded joint 1 after the end of welding.

Here, the outer end portion B of the corona bond 122 in (1) is an end portion that is not in contact with the nugget 121 among both ends of the corona bond 122 visually recognized on both sides of the nugget 121 in the cross section of the weld 12.

The specific outer end portion B of the corona bond 122 (measurement range of the average effective grain size described later) is a region indicated by A1 in FIG. 2 which is an enlarged view of the outer end portion of the corona bond surrounded by a broken line in FIG. 1A. The region A1 is a rectangular region having four sides each having a length of 200 $\mu$m, one side of the region A1 substantially coincides with the corona bond 122, and one vertex of the region A1 coincides with the outer end portion B of the corona bond.

In a typical spot-welded joint, the circumferential edge portion of the indentation on the surface is not necessarily the heat-affected zone 123. Therefore, in order for (2) to become the LME occurrence region, the spot-welded joint in which (2) is the heat-affected zone 123 is limited. However, in the spot-welded joint including the high strength steel sheet 10H targeted in the present embodiment, in order to ensure sufficiently high joint strength, spot welding with high heat input is often performed, and the nugget diameter and the width of the heat-affected zone are also relatively large, and thus, the circumferential edge portion of the indentation in (2) often becomes the heat-affected zone 123. With such a large nugget diameter, the circumferential edge portion of the indentation in (2) becomes the heat-affected zone 123.

In the present embodiment, at least one or more of the zinc-based-plated layers 11 are on the overlapping surface of the high strength steel sheets having a tensile strength of 980 MPa or more. Therefore, the LME occurrence region (1) always exists. On the other hand, in the present embodiment, the LME occurrence region (2) may not be present from the following three points: the zinc-based-plated layer may not be present on the surface of the spot-welded joint, the circumferential edge of the indentation in (2) may not become the heat-affected zone 123, and (even when there is a zinc-based-plated layer on the surface of the spot-welded joint and the circumferential edge of the indentation in (2) is the heat-affected zone 123) the steel sheet may not be a high strength steel sheet having a tensile strength of 980 MPa or more. That is, the LME occurrence region (2) exists only when the zinc-based-plated layer is present on the surface of the spot-welded joint, the circumferential edge of the indentation on the surface is the heat-affected zone 123, and the steel sheet having the indentation on the surface is a high strength steel sheet having a tensile strength of 980 MPa or more.

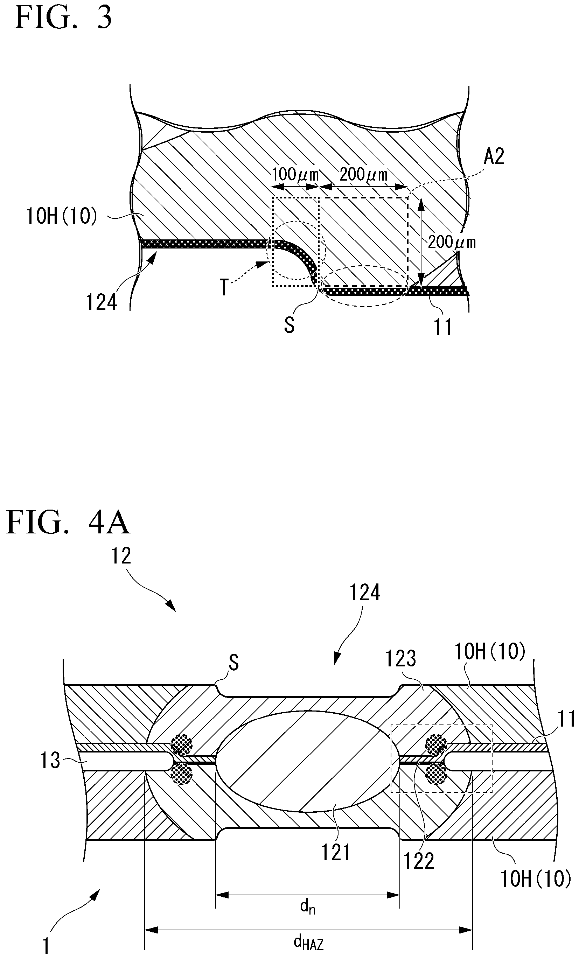

The specific circumferential edge portion of the indentation (measurement range of the average effective grain size described later) is, for example, a peripheral portion of Reference Number S illustrated in FIG. 3. FIG. 3 is an enlarged view of a region surrounded by a broken line illustrated in FIG. 1C. Reference Number S denotes a boundary between a bent portion to which the tip shape of the electrode tip is transferred and a substantially flat portion not in contact with the electrode in the cut surface of the weld 12. Specifically, the peripheral portion of Reference Number S is a horizontally long rectangular region A2 including a square region having a side of 200 $\mu$m and a vertically long rectangular region indicated by a dotted line in FIG. 3. The rectangular region A2 has a long side of 300 $\mu$m and a short side of 200 $\mu$m. One long side of the rectangular region A2 coincides with the surface of the steel sheet outside the indentation. The rectangular region A2 has a width of 100 $\mu$m in a direction from Reference Number S toward the center of the indentation, and further has a width of 200 $\mu$m in a direction from Reference Number S toward the outside of the indentation. In FIG. 3, a substantially elliptical region indicated by a dotted line and a substantially elliptical region indicated by a broken line are illustrated. A substantially elliptical region of a dotted line denoted by Reference Number T is referred to as a shoulder portion of the weld. A substantially elliptical region indicated by a broken line on the right side of Reference Number S in FIG. 3 is referred to as a shoulder outside of the weld.

LME does not occur at the outer end portion of the corona bond formed on the overlapping surface on which the zinc-based plating is not disposed and the circumferential edge portion of the indentation formed on the surface on which the zinc-based plating is not disposed. Therefore, these sites are not LME occurrence regions. As described later, the average effective grain size is not necessarily limited. For example, in the spot-welded joint of FIG. 1A, the circumferential edge portion of the indentation is formed on the upper surface and the lower surface thereof, but no zinc-based-plated layer is disposed on these surfaces. Therefore, the average effective grain size is not limited at the circumferential edge portion of the indentation in the spot-welded joint of FIG. 1A. Similarly, the average effective grain size is not limited at the circumferential edge portion of the indentation on the lower side of the spot-welded joint of FIG. 1A.

The zinc-based-plated layer not in contact with the high strength steel sheet 10H does not generate LME. Therefore, the average effective grain size of the heat-affected zone 123 is not limited also on the surface on which the zinc-based-plated layer 11 not in contact with the high strength steel sheet 10H is disposed, and the overlapping surface. For example, as illustrated in FIGS. 1B and 1C, when the low strength steel sheet 10L is disposed on the surface of the spot-welded joint 1 and the zinc-based-plated layer 11 is disposed on the surface of the low strength steel sheet 10L, LME does not occur at the circumferential edge portion of the indentation 124 on the surface of the low strength steel sheet 10L. Therefore, the circumferential edge portion of the indentation 124 on the surface of the low strength steel sheet 10L is not the LME occurrence region. Therefore, as described later, the average effective grain size of the heat-affected zone 123 is not necessarily limited. For example, in the spot-welded joint 1 of FIGS. 1B and 1C, the average effective grain size of the heat-affected zone 123 is not limited at the circumferential edge portion of the upper indentation 124.

For example, when the spot-welded joint 1 has one high strength steel sheet 10H and two low strength steel sheets 10L, the two low strength steel sheets 10L are overlapped, and the zinc-based-plated layer 11 is disposed on the overlapping surface between the two low strength steel sheets 10L, LME does not occur at the outer end portion of the corona bond 122 formed on the overlapping surface between the two low strength steel sheets 10L. This site is not an LME occurrence region. Therefore, as described later, the average effective grain size of the heat-affected zone 123 is not limited at the outer end portion of the corona bond 122 formed on the overlapping surface between the two low strength steel sheets 10L.

(Average effective grain size of heat-affected zone of high strength steel sheet in LME occurrence region)

In the spot-welded joint 1 according to the first embodiment, the average effective grain size of the heat-affected zone 123 of the high strength steel sheet 10H at the outer end portion of the corona bond formed on the overlapping surface on which the zinc-based-plated layer is disposed and the circumferential edge portion of the indentation on the surface on which the zinc-based-plated layer is disposed is 15.0 $\mu$m or less. The average effective grain size is more preferably 13.0 $\mu$m or less, 11.0 $\mu$m or less, or 9.0 $\mu$m or less. The lower limit of the average effective grain size is not particularly limited, but from the viewpoint of enhancing the production efficiency of the spot-welded joint 1, the average effective grain size is preferably 6.0 $\mu$m or more, 7.0 $\mu$m or more, or 8.0 $\mu$m or more.

(Operation and effects)

In the spot-welded joint 1 according to the present embodiment, the diameter $d_n$ of the nugget 121 is 4.0√Tave or more. As a result, the spot-welded joint 1 has a high joining strength. However, in order to further increase the joining strength, it is necessary to suppress LME cracking in addition to increasing the diameter of the nugget.

The LME cracking of the steel sheet 10 occurs when a tensile stress is applied to the steel sheet 10 in a state where the surface of the steel sheet 10 and molten zinc are in contact with each other. In the process of cooling the spot-welded joint 1 after welding, tensile residual stress is likely to occur in the heat-affected zone 123 of the high strength steel sheet 10H at the outer end portion of the corona bond formed on the overlapping surface on which the zinc-based-plated layer is disposed. Similarly, tensile residual stress is likely to be generated also at the circumferential edge portion of the indentation on the surface on which the zinc-based-plated layer is disposed. In the process of cooling the spot-welded joint 1 after welding, molten zinc is present in the heat-affected zone 123. Therefore, in the spot-welded joint 1 according to the first embodiment, there is an occurrence factor of LME cracking.

However, in the spot-welded joint 1 according to the first embodiment, the average grain of the high strength steel sheet in contact with the zinc-based-plated layer is 7.0 $\mu$m or less. As a result, the average effective grain size of the heat-affected zone 123 of the high strength steel sheet 10H at the outer end portion of the corona bond formed on the overlapping surface on which the zinc-based-plated layer is disposed and the circumferential edge portion of the indentation on the surface on which the zinc-based-plated layer is disposed can be 15.0 $\mu$m or less. By receiving the welding heat input, the grains of the heat-affected zone of the high strength steel sheet in contact with the zinc-based-plated layer grow. The average effective grain size of the heat-affected zone after spot welding is a value corresponding to the heat input time and the amount of heat input at the time of spot welding, and the average effective grain size before spot welding. By reducing the average effective grain size before spot welding, coarsening of the grain size in the heat-affected zone (particularly, the heat-affected zone 123 of the high strength steel sheet 10H at the outer end portion of the corona bond formed on the overlapping surface on which the zinc-based-plated layer is disposed and the circumferential edge portion of the indentation on the surface on which the zinc-based-plated layer is disposed) after spot welding can be suppressed.

By reducing the average effective grain size of the heat-affected zone 123 of the high strength steel sheet 10H at the outer end portion of the corona bond formed on the overlapping surface on which the zinc-based-plated layer is disposed and the circumferential edge portion of the indentation on the surface on which the zinc-based-plated layer is disposed, the amount of grain boundaries of the high strength steel sheet 10H in the heat-affected zone 123 can be increased, and the LME sensitivity of the steel sheet 10 can be reduced. By increasing the amount of grain boundaries, the concentration of zinc entering the grain boundaries is diluted, and embrittlement of the grain boundaries is suppressed.

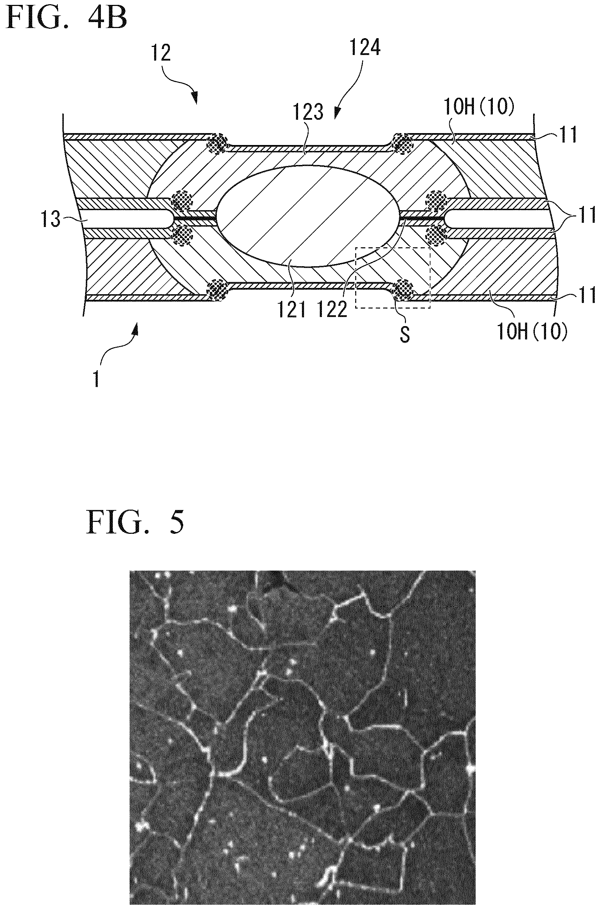

In the spot-welded joint 1 according to the first embodiment, the concentration of B atoms at the prior austenite grain boundary in the base material portion of the high strength steel sheet 10H in contact with the zinc-based-plated layer 11 is 2.0 atm% or more. The B atoms segregated at the prior austenite grain boundary increase the peel strength of the prior austenite grain boundary. As shown in FIG. 5, B atoms have a property of being enriched at the prior austenite grain boundaries in the heat-affected zone 123. Therefore, the B atomic concentration at the prior austenite grain boundary of the high strength steel sheet 10H in the heat-affected zone 123 of the high strength steel sheet 10H at the outer end portion of the corona bond formed on the overlapping surface on which the zinc-based-plated layer is disposed and the circumferential edge portion of the indentation on the surface on which the zinc-based-plated layer is disposed is higher than the B atomic concentration in the base material portion. In the heat-affected zone 123 of the high strength steel sheet 10H at the outer end portion of the corona bond formed on the overlapping surface on which the zinc-based-plated layer of the high strength steel sheet 10H is disposed and the circumferential edge portion of the indentation on the surface on which the zinc-based-plated layer is disposed, the LME sensitivity is further reduced.

For the above reasons, in the spot-welded joint 1 according to the first embodiment, the LME cracking is strongly suppressed although the LME cracking occurrence factor exists. The zinc-based-plated layer 11 serves as an occurrence factor of LME cracking, and has various operation and effects such as a dramatical increase in corrosion resistance of the spot-welded joint 1. According to the spot-welded joint 1 according to the first embodiment, it is possible to improve the reliability of a joined joint having the zinc-based-plated layer 11 and to expand the application range.

The most basic aspect of the spot-welded joint 1 according to the first embodiment has been described above. Next, a more preferable aspect of the spot-welded joint 1 according to the first embodiment will be described.

When the steel sheet 10 is a high strength steel sheet (specifically, when the tensile strength is 980 MPa or more) at the circumferential edge portion of the indentation on the surface on which the zinc-based-plated layer is disposed, the nugget diameter is often relatively large in order to ensure a sufficiently high joint strength. As a result, the circumferential edge portion of the indentation on the surface on which the zinc-based-plated layer is disposed often becomes the heat-affected zone 123.

(Relationship between diameter $d_{HAZ}$ of heat-affected zone and diameter $d_n$ of nugget)

In the spot-welded joint 1 according to the first embodiment, a diameter $d_{HAZ}$ of the heat-affected zone is preferably 1.30 times or less the diameter $d_n$ of the nugget. When the number of steel sheets 10 is 3 or more and the number of overlapping surfaces of these steel sheets 10 is 2 or more, the diameter $d_{HAZ}$ of the heat-affected zone is preferably 1.30 times or less the diameter $d_n$ of all the nuggets.

As a proportion $d_{HAZ}/d_n$ of the diameter $d_{HAZ}$ of the heat-affected zone with respect to the diameter $d_n$ of the nugget is smaller, the heat input to the weld 12 is smaller, so that the average effective grain size of the high strength steel sheet 10H in the LME occurrence region can be further reduced. $d_{HAZ}/d_n$ may be 1.25 or less, 1.2 or less, or 1.1 or less. In order to reduce $d_{HAZ}/d_n$, the heat input may be reduced. Therefore, for example, by searching for a spot welding condition that can satisfy a target $d_{HAZ}/d_n$ by a preliminary test in advance, a spot-welded joint having a target $d_{HAZ}/d_n$ can be manufactured.

(Zinc-based-plated layer disposed on surface of spot-welded joint)

As described above, the zinc-based-plated layer 11 in contact with the high strength steel sheet 10H may be disposed on the surface of the spot-welded joint 1. This further improves corrosion resistance of the spot-welded joint 1.

When the zinc-based-plated layer 11 in contact with the high strength steel sheet 10H is disposed on the surface of the spot-welded joint 1, the average effective grain size of the heat-affected zone 123 of the high strength steel sheet 10H in the peripheral portion of the indentation 124 formed on the surface is 15.0 $\mu$m or less. This suppresses LME cracking in the high strength steel sheet disposed on the surface of the spot-welded joint 1.

(2. Method for manufacturing spot-welded joint)

A method for manufacturing a spot-welded joint according to a second embodiment of the present invention includes: main energizing in which a welding current is applied to a pair of electrodes sandwiching a plurality of stacked steel sheets 10, one or more of the plurality of steel sheets 10 being a high strength steel sheet 10H having a tensile strength of 980 MPa or more, a zinc-based-plated layer 11 being disposed on surfaces of the one or more of the steel sheets 10, the zinc-based-plated layer 11 being disposed at least on an overlapping surface of the steel sheets 10, and the zinc-based-plated layer 11 being in contact with the one or more high strength steel sheets 10H; and retaining a pressurizing force on the steel sheet 10 by the pair of electrodes in a state where energization to the pair of electrodes is stopped, in which the concentration of B atoms at a prior austenite grain boundary of the high strength steel sheet 10H in contact with the zinc-based-plated layer 11 is 2.0 atm% or more, the average effective grain size of the high strength steel sheet 10H in contact with the zinc-based-plated layer 11 is 7.0 $\mu$m or less, and Formulas 1, 2, and 3 are satisfied:

$$0.13 \times \text{Tave} \leq \text{tw} \leq 0.17 \times \text{Tave} \quad \text{(Formula 1)}$$

$$1.90 \leq \text{Iw} \times \text{tw} \leq 2.24 \quad \text{(Formula 2)}$$

$$2400 \times \text{Tave} \leq \text{Pw} \quad \text{(Formula 3)}$$

where Tave is a value obtained by dividing the total thickness in units of mm of the plurality of steel sheets 10 by 2, tw is an energizing time in units of s in the main energizing, Iw is a welding current value in units of kA in the main energizing, and Pw is a pressurizing force in units of N in the main energizing.

(Main energizing and retaining)

The method for manufacturing a spot-welded joint according to the present embodiment includes a main energizing step and a retention step. The main energizing step is so-called spot welding. In the main energizing step, a welding current is applied to a pair of electrodes pinching the plurality of stacked steel sheets 10. The welding current is a current flowing for forming the weld 12, and is also referred to as main current. In the retention step, the pressurizing force on the steel sheet 10 by the pair of electrodes is retained in a state where the energization to the pair of electrodes is stopped.

(High strength steel sheet 10H and zinc-based-plated layer 11)

In the plurality of steel sheets 10 as the weld base metal, one or more steel sheets 10 have the zinc-based-plated layer 11 on the surface thereof, and one or more steel sheets 10 are the high strength steel sheet 10H having a tensile strength of 980 MPa or more. The plurality of steel sheets 10 are stacked such that one or more high strength steel sheets 10H are in contact with the zinc-based-plated layer 11. The concentration of B atoms at the prior austenite grain boundary of the high strength steel sheet 10H in contact with the zinc-based-plated layer 11 is 2.0 atm% or more, and the average effective grain size of the high strength steel sheet 10H in contact with the zinc-based-plated layer 11 is 7.0 $\mu$m or less. The constitutions and the positional relationship of the high strength steel sheet 10H and the zinc-based-plated layer 11 are similar to those of the spot-welded joint 1 according to the first embodiment. The preferred aspect exemplified in the description of the spot-welded joint 1 according to the first embodiment can be applied to the method for manufacturing a spot-welded joint according to the second embodiment.

(Welding conditions)

The main energizing step and the retention step are performed so as to satisfy Formulas 1, 2, and 3.

$$0.13 \times \text{Tave} \le \text{tw} \le 0.17 \times \text{Tave} \quad \text{(Formula 1)}$$

$$1.90 \le \text{Iw} \times \text{tw} \le 2.24 \quad \text{(Formula 2)}$$

$$2400 \times \text{Tave} \le \text{Pw} \quad \text{(Formula 3)}$$

Tave is the average thickness in units of mm of the steel sheets 10. When the number of the steel sheets 10 is 3 or more, a value obtained by dividing the total sheet thickness of the steel sheets 10 by 2 is Tave.

tw is an energizing time in units of s in the main energizing step. When the main energizing step is pulse energization described later, a total sum of the time during which the welding current flows is tw.

Iw is a welding current value in units of kA in the main energizing step. When the current value in the main energizing step is not a constant value, the average value of welding current values is Iw. The average value of welding current values is a value obtained by dividing the time integral value of the welding current by the total sum tw of the time during which the welding current flows. When the main energizing step is pulse energization, the non-energizing time is ignored in calculating the average value of welding current values.

Pw is a pressurizing force in units of N in the main energizing step. When the pressurizing force in the main energizing step is not a constant value, it is sufficient that the pressurizing force always satisfies Formula 3 from the start to the end of the energization of the welding current. When the main energizing step is pulse energization, the expression "from the start to the end of the energization of the welding current" means a period from the start of the first energization of the welding current to the end of the last energization of the welding current.

(Operation and effects)

In the method for manufacturing a spot-welded joint according to the present embodiment, the concentration of B atoms at the prior austenite grain boundary in the high strength steel sheet 10H in contact with the zinc-based-plated layer 11 is 2.0 atm% or more. The B enrichment at the prior austenite grain boundary is promoted in the heat-affected zone 123 by the heat input at the time of spot welding. As described with respect to the spot-welded joint 1 according to the first embodiment, the B atoms segregated at the prior austenite grain boundary increase the peel strength of the prior austenite grain boundary. This reduces the LME sensitivity of the high strength steel sheet 10H in the LME occurrence region.

In the method for manufacturing a spot-welded joint according to the present embodiment, the average effective grain size of the high strength steel sheet 10H in contact with the zinc-based-plated layer 11 is 7.0 $\mu$m or less, and the welding conditions satisfy Formulas 1, 2, and 3.

The average effective grain size of the high strength steel sheet 10H in contact with the zinc-based-plated layer 11 affects the average effective grain size of the high strength steel sheet 10H in the LME occurrence region after spot welding. By reducing the average effective grain size before spot welding, enlargement of grains in the LME occurrence region after spot welding is suppressed.

Formula 1 defines the energizing time in the main energizing step. Formula 2 defines the product of the energizing time and the welding current value in the main energizing step. The product of the energizing time and the welding current value is an index value of the amount of heat input. When both Formulas 1 and 2 are satisfied, the energizing time in the main energizing step is shorter than usual, and the welding current value is larger than usual. By energizing a large current in a short time, it is possible to reduce the time during which the weld 12 is kept at a high temperature and to suppress enlargement of grains in the heat-affected zone 123.

However, when the energizing time is too short, the welding current value has to be set extremely high. As a result, an excessive amount of dispersion may occur. Therefore, in Formula 1, the lower limit of the energizing time is also defined. When the amount of heat input is too low, the size of the nugget 121 becomes small, and the possibility that a joining failure occurs increases. Therefore, in Formula 2, the lower limit of Iw × tw is also defined.

Formula 3 defines the lower limit of the pressurizing force in the main energizing step. The pressurizing force defined by Formula 3 is a value larger than that under normal conditions. By increasing the pressurizing force, the current density can be reduced, and heat removal from the weld 12 to the electrode can be promoted. As a result, the temperature rise of the plate assembly surface in contact with the electrode can be suppressed, and the coarsening of grains can be suppressed.

By reducing the average effective grain size of the high strength steel sheet 10H in the LME occurrence region by performing the main energizing so as to satisfy Formulas 1, 2, and 3, the amount of grain boundaries at the site can be increased, and the LME sensitivity of the site can be further reduced. By increasing the amount of grain boundaries, the concentration of zinc entering the grain boundaries is diluted, and embrittlement of the grain boundaries is suppressed.

The most basic aspect of the method for manufacturing a spot-welded joint according to the second embodiment has been described above. Next, a more preferable aspect of the method for manufacturing a spot-welded joint according to the second embodiment will be described.

(Retention time)

Preferably, the retention time th in the retention step satisfies Formula 4.

$$0.08 \times \text{Tave}^2 \leq \text{th} \leq 0.42 \times \text{Tave}^2 \quad \text{(Formula 4)}$$

th is a retention time in units of s in the retention step. The retention time is a time from the end of flowing of the welding current to the start of opening of the electrode. When the method for manufacturing a spot-welded joint includes a post energizing step, the retention time is a time from the end of flowing of a post-heat current to the start of opening of the electrode. Tave is the average thickness in units of mm of the steel sheets 10. When the number of the steel sheets 10 is 3 or more, a value obtained by dividing the total sheet thickness of the steel sheets 10 by 2 is Tave.

The retention time is longer than usual. As a result, the cooling of the weld 12 after the completion of the energization can be promoted, and the coarsening of grains can be further suppressed. By providing the retention step, the electrode can be opened after the temperature of the weld 12 is sufficiently lowered, so that the occurrence of LME can be further suppressed.

(Pulse energization)

The main energizing may be pulse energizing. The pulse energization refers to an energization pattern in which one main energizing step has two or more energizing times of the welding current and a non-energizing time therebetween. By performing the pulse energization in the main energizing step, it is possible to reliably prevent a rapid temperature rise of the weld and to obtain an effect of further reliably suppressing the coarsening of grains.

(3. Vehicle component)

A vehicle component according to a third embodiment of the present invention includes the spot-welded joint 1 according to the first embodiment. Therefore, in the vehicle component according to the third embodiment, although high corrosion resistance is brought about by the zinc-based-plated layer 11, LME cracking is strongly suppressed. The vehicle component is, for example, a center pillar.

(Other embodiments)

Although embodiments of the present invention have been described above, the present invention is not limited thereto, and can be appropriately modified without departing from the technical idea of the invention. Hereinafter, modification examples of the present invention are described. Unless otherwise specified, aspects described below are applicable to all of the first embodiment, the second embodiment, and the third embodiment.

(Chemical composition, metallographic structure, and thickness of steel sheet 10)

In the spot-welded joint 1 according to the present embodiment and the method for manufacturing the same, the average effective grain size and the B concentration at the prior austenite grain boundary in the base material portion of the steel sheet in which LME cracking is likely to occur, that is, the high strength steel sheet 10H in contact with the zinc-based-plated layer 11 are defined. As long as these elements are within the above-described ranges, the chemical composition, the metallographic structure, and the like of the high strength steel sheet 10H in contact with the zinc-based-plated layer 11 are not particularly limited. The chemical composition and the metallographic structure of the low strength steel sheet 10L and the high strength steel sheet 10H not in contact with the zinc-based-plated layer 11 are also not particularly limited. For example, a base steel sheet of a hot-dip galvanized steel sheet disclosed in Patent Document 2 (PCT International Publication No. WO 2020/162561) can be suitably used as the high strength steel sheet 10H of the spot-welded joint 1 according to the present embodiment.

The thickness of the steel sheet 10 is also not particularly limited. The thickness of the steel sheet 10 is preferably, for example, 0.8 mm or more. The thickness of the steel sheet 10 is preferably, for example, 3.2 mm or less or 2.3 mm or less. The total thickness of the plurality of steel sheets 10 included in the spot-welded joint 1 is preferably 1.6 mm or more. The total thickness of the plurality of steel sheets 10 included in the spot-welded joint 1 is preferably 6.4 mm or less or 6.0 mm or less.

(Post energizing)

The method for manufacturing a spot-welded joint according to the present embodiment may further include post energizing. In the post energizing, a post-heat current is applied to the weld 12. The post-heat current is a current that flows for the purpose of tempering or annealing the cured weld 12 after welding in spot welding of a steel material to be cured by welding, and is also referred to as a temper current. The post energizing step can further increase the joining strength of the spot-welded joint 1.

(Measurement method)

The concentration of B atoms at the prior austenite grain boundary of the high strength steel sheet 10H in contact with the zinc-based-plated layer 11 at the outside of the weld 12 is determined by the STEM-EELS method. Specifically, for example, it is determined by a method disclosed in METALLURGICAL AND MATERIALS TRANSACTIONS A: vol. 45A, p. 1877 to 1888. First, a sample is collected with a cross section perpendicular to the surface of the high strength steel sheet 10H in contact with the zinc-based-plated layer 11 at the outside of the weld 12 as an observed section, and the observed section is mechanically polished to be a mirror surface, and then electrolytic polishing is performed. Next, in one or a plurality of observed visual fields in a range of 1/8 thickness to 3/8 thickness centered on 1/4 thickness from the surface in the observed section, the crystal structure and orientation of a total area of $2.0 \times 10^{-9}$ m$^2$ or more are analyzed by the SEM-EBSD method to identify the prior austenite grain boundary. Next, a region including the prior austenite grain boundary is extracted by FIB processing in the SEM. Thereafter, the film is thinned to about 70 nm using Ar ion milling or the like. For the thinned test piece, the concentration of B atoms is linearly analyzed by electron energy-loss spectroscopy (EELS) along a line crossing the prior austenite grain boundary by aberration correction STEM. The scanning step at the time of line analysis is 0.1 nm. Since B atoms segregate at the prior austenite grain boundary, the absolute maximum value of the concentration of B atoms obtained is regarded as the concentration of B atoms at the prior austenite grain boundary. The number of measurements is three, and the average value of the measurement results is taken as the concentration of B atoms.

The average effective grain size of the high strength steel sheet 10H in contact with the zinc-based-plated layer 11 at the outside of the weld 12 is evaluated by SEM-EBSD (Electron BackScatter Diffraction method). First, a sample is collected with a cross section perpendicular to the surface of the high strength steel sheet 10H in contact with the zinc-based-plated layer 11 at the outside of the weld 12 as an observed section, and the observed section is mechanically polished to be a mirror surface, and then electrolytic polishing is performed. Next, in one or a plurality of observed visual fields in a range of 1/8 thickness to 3/8 thickness centered on 1/4 thickness from the surface in the observed section, the crystal structure and orientation are analyzed by the SEM-EBSD method. For analysis of data obtained by the EBSD method, "OIM Analysis 6.0" manufactured by TSL is used. The distance between marks (step) is 0.03 to 0.20 $\mu$m. A region determined to be FCC iron from the observation result is defined as residual austenite. A grain boundary map is obtained using a boundary where the crystal orientation difference is 15 degrees or more as a grain boundary. A value calculated by the following formula is taken as the average effective grain size.

[Mathematical Formula 1]

$$D = \frac{\sum\limits_{i=1}^{N} Ai \times di}{\sum\limits_{i=1}^{N} Ai}$$

In the formula, N represents the number of grains included in the evaluation region of the average effective grain size, Ai represents the area of the i-th (i = 1, 2, ..., N) grain, and di represents the circle equivalent diameter of the i-th grain. These data are easily obtained by EBSD analysis.

The method for measuring the average effective grain size of the high strength steel sheet 10H in the LME occurrence region is the same as the method for measuring the average effective grain size of the base material portion of the high strength steel sheet 10H in contact with the zinc-based-plated layer 11 except for the measurement point. The measurement takes place in a cross section perpendicular to the surface of the spot-welded joint 1 and passing through the center of the weld 12.

As illustrated in FIG. 2, the measurement region A1 of the average effective grain size of the high strength steel sheet 10H in contact with the zinc-based-plated layer 11 at the outer end portion B of the corona bond is a rectangular region having four sides each having a length of 200 $\mu$m, one side of which substantially coincides with the corona bond 122, and one vertex of which coincides with the outer end portion B of the corona bond.

A measurement region of the average effective grain size of the high strength steel sheet 10H in contact with the zinc-based-plated layer 11 in the circumferential edge portion of the indentation is the rectangular region A2 in FIG. 3. The rectangular region A2 has a long side of 300 $\mu$m and a short side of 200 $\mu$m. One long side of the rectangular region A2 coincides with the surface of the steel sheet outside the indentation. The rectangular region A2 has a width of 100 $\mu$m in a direction approaching the nugget from Reference Number S, and further has a width of 200 $\mu$m in a direction opposite to the nugget from Reference Number S.

In each of these measurement regions A1 and A2, the average effective grain size is calculated using the above formula. If the circumferential edge portion of the indentation is not formed on the high strength steel sheet 10H in contact with the zinc-based-plated layer 11, the measurement region A2 does not exist, so that the measurement of the average effective grain size at the circumferential edge portion of the indentation is unnecessary. When there are a plurality of measurement regions, the average effective grain size needs to be within the above-described range in each of the plurality of measurement regions.

The measurement position of the average effective grain size when the two stacked steel sheets are high strength steel sheets and the plated layer is present only on the mating surface of the upper sheet on the upper sheet side is illustrated in FIG. 4A. FIG. 4B illustrates the measurement position of the average effective grain size when the two stacked steel sheets are high strength steel sheets and the plated layer is present on both surfaces of the upper sheet and the lower sheet. Here, in order to set one of the right and left sides of the cross section as the measurement region, the position of the black circle is set as the measurement point in both FIGS. 4A and 4B. A spot-welded joint in which the grain size is within the above-described range in all black circles is determined to satisfy the requirement regarding the average effective grain size of the heat-affected zone.

In the case of FIG. 4A, the measurement is performed at each of the four points marked with black circles, and the average effective grain size is calculated using the above formula. In the case of FIG. 4B, the measurement is performed at each of the eight points marked with black circles, and the average effective grain size is calculated using the above formula.

The measurement of the diameter $d_{HAZ}$ of the heat-affected zone and the diameter $d_n$ of the nugget is performed in an arbitrary cross section perpendicular to the surface of the spot-welded joint 1 and passing through the center of the weld 12. The outer edge of the nugget 121 can be easily visually recognized by naked eye observation or microscopic observation. The outer edge of the heat-affected zone 123 can be easily visually recognized by naked eye observation or microscopic observation after the cross section is appropriately polished and etched. As illustrated in FIG. 1A, the diameter $d_n$ of the nugget can be easily determined by measuring the width of the nugget 121 along the overlapping surface of the steel sheets 10 in a cross section. The diameter $d_{HAZ}$ of the heat-affected zone 123 is the maximum width (diameter) of the heat-affected zone 123 as measured in a cross section. Unlike the diameter $d_n$ of the nugget, the diameter $d_{HAZ}$ of the heat-affected zone 123 in the spot-welded joint according to the present embodiment is not a value as measured along the overlapping surface of the steel sheets 10.

Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

Spot welding was performed on plate assemblies 1 to 19 described in Table 1 under the conditions of Table 2 to prepare spot-welded joints 1 to 19. The plate assembly 19 has three steel sheets, and the other plate assemblies have two steel sheets. The average effective grain size of the heat-affected zone of the spot-welded joint, the nugget diameter $d_n$, and the HAZ diameter $d_{HAZ}$ were measured and described in Table 3. When there are a plurality of overlapping surfaces in the spot-welded joint 19, the smallest nugget diameter $d_n$ is described in Table 3. The frequency of occurrence of LME cracking in the spot-welded joint was also investigated, and the results are described in Table 3. The constitution of the pair of electrodes for spot welding was as follows.

· Shape: dome radius type (DR type)
· Diameter d of tip: 6 mm
· Radius of curvature R of tip: 40 mm
· Material of tip: 1% Cr-Cu

In any of the steel sheets described in Table 1, the average effective grain size was 7.0 $\mu$m or less, and the concentration of B atoms at the prior austenite grain boundary was 2.0 atm% or more. The steel sheet 1 was provided with hot-dip galvanization. The adhesion amount of galvanization was 62 g/m$^2$ as desired. Values outside the appropriate range were underlined. The retention time was 250 ms.

The method for measuring the average effective grain size of the heat-affected zone was as described above. In the table, the absolute maximum value among the average effective grain sizes at each of the plurality of measurement points is described. In an example in which the absolute maximum value is 15.0 $\mu$m or less, it is determined that the requirement regarding the average effective grain size of the heat-affected zone is satisfied.

The frequency of occurrence of LME cracking of the spot-welded joint was evaluated by the following method. Ten spot-welded joints were prepared per condition by the above-described technique, and the cross sections of welds thereof were observed to confirm the presence or absence of LME cracking. The number of spot-welded joints where LME cracking has occurred is the frequency of occurrence of LME cracking. When LME cracking did not occur in all the ten test specimens, it was determined that LME cracking was sufficiently suppressed.

[Table 1]

| No. | Steel sheet 1 | | | Steel sheet 2 | | | Steel sheet 3 | | |
|---|---|---|---|---|---|---|---|---|---|
| | Sheet thickness (mm) | Tensile strength (MPa) | C (mass%) | Sheet thickness (mm) | Tensile strength (MPa) | C (mass%) | Sheet thickness (mm) | Tensile strength (MPa) | C (mass%) |
| 1 | 1.6 | 995 | 0.22 | 1.6 | 995 | 0.22 | - | - | - |
| 2 | 1.6 | 995 | 0.22 | 1.6 | 995 | 0.22 | - | - | - |
| 3 | 1.6 | 995 | 0.22 | 1.6 | 995 | 0.22 | - | - | - |
| 4 | 1.6 | 995 | 0.22 | 1.6 | 995 | 0.22 | - | - | - |
| 5 | 1.6 | 995 | 0.22 | 1.6 | 995 | 0.22 | - | - | - |
| 6 | 1.6 | 995 | 0.22 | 1.6 | 995 | 0.22 | - | - | - |
| 7 | 1.6 | 995 | 0.22 | 1.6 | 995 | 0.22 | - | - | - |
| 8 | 1.6 | 995 | 0.22 | 1.6 | 995 | 0.22 | - | - | - |
| 9 | 1.6 | 995 | 0.22 | 1.6 | 995 | 0.22 | - | - | - |
| 10 | 1.6 | 995 | 0.22 | 1.6 | 995 | 0.22 | - | - | - |

(continued)

| No. | Steel sheet 1 | | | Steel sheet 2 | | | Steel sheet 3 | | |
|---|---|---|---|---|---|---|---|---|---|
| | Sheet thickness (mm) | Tensile strength (MPa) | C (mass%) | Sheet thickness (mm) | Tensile strength (MPa) | C (mass%) | Sheet thickness (mm) | Tensile strength (MPa) | C (mass%) |
| 11 | 1.6 | 995 | 0.22 | 1.6 | 995 | 0.22 | - | - | - |
| 12 | 1.2 | 1192 | 0.21 | 1.2 | 1192 | 0.21 | - | - | - |
| 13 | 1.2 | 1192 | 0.21 | 1.2 | 1192 | 0.21 | - | - | - |
| 14 | 1.2 | 1192 | 0.21 | 1.2 | 1192 | 0.21 | - | - | - |
| 15 | 1.2 | 1192 | 0.21 | 1.2 | 1192 | 0.21 | - | - | - |
| 16 | 1.6 | 995 | 0.22 | 1.2 | 1192 | 0.21 | - | - | - |
| 17 | 1.6 | 995 | 0.22 | 1.6 | 990 | 0.22 | - | - | - |
| 18 | 1.6 | 995 | 0.22 | 1.6 | 617 | 0.13 | - | - | - |
| 19 | 1.2 | 1192 | 0.21 | 1.2 | 1192 | 0.21 | 1.2 | 1192 | 0.21 |

[Table 2]

| No. | Tave (mm) | 2400 × Tave (mm) | Pw (kN) | 0.13 × Tave (mm) | tw (s) | 0.17 × Tave (mm) | lw (kA) | lw × tw (kA·s) | 0.08 × Tave² (mm²) | 0.42 × Tave² (mm²) | th (s) |
|---|---|---|---|---|---|---|---|---|---|---|---|
| 1 | 1.6 | 3840 | 4.00 | 0.208 | 0.22 | 0.272 | 9.0 | 1.98 | 0.20 | 1.08 | 0.24 |
| 2 | 1.6 | 3840 | 4.00 | 0.208 | 0.24 | 0.272 | 8.5 | 2.04 | 0.20 | 1.08 | 0.24 |
| 3 | 1.6 | 3840 | 4.00 | 0.208 | 0.32 | 0.272 | 8.2 | 2.62 | 0.20 | 1.08 | 0.24 |
| 4 | 1.6 | 3840 | 4.00 | 0.208 | 0.26 | 0.272 | 7.5 | 1.95 | 0.20 | 1.08 | 0.24 |
| 5 | 1.6 | 38 40 | 4.00 | 0.208 | 0.34 | 0.272 | 7.2 | 2.45 | 0.20 | 1.08 | 0.24 |
| 6 | 1.6 | 3840 | 5.00 | 0.208 | 0.22 | 0.272 | 9.4 | 2.07 | 0.20 | 1.08 | 0.24 |
| 7 | 1.6 | 3840 | 5.00 | 0.208 | 0.30 | 0.272 | 9.2 | 2.76 | 0.20 | 1.08 | 0.24 |
| 8 | 1.6 | 3840 | 6.00 | 0.208 | 0.22 | 0.272 | 9.6 | 2.11 | 0.20 | 1.08 | 0.24 |
| 9 | 1.6 | 3840 | 6.00 | 0.208 | 0.30 | 0.272 | 9.4 | 2.82 | 0.20 | 1.08 | 0.24 |
| 10 | 1.6 | 3840 | 6.00 | 0.208 | 0.12 | 0.272 | 10.5 | 1.26 | 0.20 | 1.08 | 0.24 |
| 11 | 1.6 | 3840 | 4.00 | 0.208 | 0.21 | 0.272 | 10.5 | 2.21 | 0.20 | 1.08 | 0.20 |
| 12 | 1.2 | 2880 | 4.00 | 0.144 | 0.18 | 0.204 | 10.8 | 1.94 | 0.12 | 0.60 | 0.20 |
| 13 | 1.2 | 2880 | 4.00 | 0.144 | 0.28 | 0.204 | 9.0 | 2.52 | 0.12 | 0.60 | 0.20 |
| 14 | 1.2 | 2880 | 4.00 | 0.144 | 0.12 | 0.204 | 9.0 | 1.08 | 0.12 | 0.60 | 0.20 |
| 15 | 1.2 | 2880 | 4.00 | 0.144 | 0.18 | 0.204 | 10.8 | 1.94 | 0.12 | 0.60 | 0.08 |
| 16 | 1.4 | 3360 | 4.00 | 0.182 | 0.20 | 0.238 | 9.0 | 1.80 | 0.20 | 1.08 | 0.24 |
| 17 | 1.6 | 3840 | 4.00 | 0.208 | 0.22 | 0.272 | 9.0 | 1.98 | 0.20 | 1.08 | 0.24 |
| 18 | 1.6 | 3840 | 4.00 | 0.208 | 0.22 | 0.272 | 9.4 | 2.07 | 0.20 | 1.08 | 0.24 |
| 19 | 1.8 | 4320 | 5.00 | 0.234 | 0.25 | 0.306 | 8.6 | 2.15 | 0.26 | 1.36 | 0.50 |

[Table 3]

| No. | $4.0\sqrt{Tave}$ (mm) | $d_n$ (mm) | Absolute maximum value ($\mu$m) of average effective grain size of heat-affected zone | $d_{HAZ}/d_n$ | Frequency of occurrence of LME | Remark |
|---|---|---|---|---|---|---|
| 1 | 5.1 | 6.2 | 13.1 | 1.23 | 0 | Inventive Example |
| 2 | 5.1 | 6.3 | 14.9 | 1.29 | 0 | Inventive Example |
| 3 | 5.1 | 6.2 | 23.2 | 1.44 | 4 | Comparative Example |
| 4 | 5.1 | 5.9 | 14.2 | 1.25 | 0 | Inventive Example |
| 5 | 5.1 | 6.0 | 20.5 | 1.38 | 3 | Comparative Example |
| 6 | 5.1 | 5.9 | 13.8 | 1.27 | 0 | Inventive Example |
| 7 | 5.1 | 6.0 | 21.3 | 1.41 | 2 | Comparative Example |
| 8 | 5.1 | 5.9 | 13.9 | 1.28 | 0 | Inventive Example |
| 9 | 5.1 | 6.0 | 19.1 | 1.39 | 2 | Comparative Example |
| 10 | 5.1 | 5.0 | 11.8 | 1.18 | 0 | Comparative Example |
| 11 | 5.1 | 6.3 | 14.9 | 1.32 | 1 | Inventive Example |
| 12 | 4.4 | 5.2 | 13.1 | 1.19 | 0 | Inventive Example |
| 13 | 4.4 | 5.6 | 19.4 | 1.35 | 6 | Comparative Example |
| 14 | 4.4 | 4.3 | 12.3 | 1.15 | 0 | Comparative Example |
| 15 | 4.4 | 5.2 | 14.2 | 1.21 | 1 | Inventive Example |
| 16 | 4.7 | 4.5 | 14.4 | 1.19 | 0 | Comparative Example |
| 17 | 5.1 | 6.3 | 13.1 | 1.24 | 0 | Inventive Example |
| 18 | 5.1 | 6.3 | 12.4 | 1.22 | 0 | Inventive Example |
| 19 | 5.4 | 5.5 | 12.3 | 1.19 | 0 | Inventive Example |

In an example in which the spot welding conditions were appropriate and the average effective grain size of the heat-affected zone was within a suitable range, the frequency of occurrence of LME was suppressed to a very low level. In these examples, since a large nugget diameter was secured, a high joining strength was secured. On the other hand, in Comparative Examples 3, 5, 7, 9, and 13 in which the average effective grain size of the heat-affected zone was coarse, the frequency of occurrence of LME was high. In Comparative Examples 10, 14, and 16, the frequency of occurrence of LME was suppressed, but the nugget diameter was insufficient.

In Comparative Examples 3, 5, 7, 9, and 13, the average effective grain size of the heat-affected zone was coarse. The reason for this is presumed to be that the energizing time tw in the main energizing step was too long, Formulas 1 and 2 were not satisfied, and the amount of heat input to the heat-affected zone was excessive.

In Comparative Examples 10 and 14, the nugget diameter was insufficient. The reason for this is presumed to be that the energizing time tw in the main energizing step is too short, Formulas 1 and 2 are not satisfied, and the amount of heat input is insufficient.

In Comparative Example 16, the nugget diameter was insufficient. The reason for this is presumed to be that the combination of the welding current value and the energizing time in the main energizing step is not appropriate, Formula 2 is not satisfied, and the amount of heat input is insufficient.

REFERENCE SIGNS LIST

1 Spot-welded joint
10 Steel sheet
10L Low strength steel sheet
10H High strength steel sheet

11 Zinc-based-plated layer
12 Weld
121 Nugget
122 Corona bond
123 Heat-affected zone
124 Indentation
13 Sheet gap
A1 Measurement region of average effective grain size at outer end portion of corona bond
A2 Measurement region of average effective grain size in circumferential edge portion of indentation
T Shoulder portion
S Circumferential edge of indentation
B Outer end portion of corona bond
$d_{HAZ}$ Diameter of heat-affected zone
$d_n$ Diameter of nugget

**Claims**

1. A spot-welded joint comprising:

   a plurality of stacked steel sheets, one or more of the plurality of steel sheets being a high strength steel sheet having a tensile strength of 980 MPa or more;
   a weld including a nugget joining the steel sheets, and a heat-affected zone and a corona bond around the nugget; and
   a zinc-based-plated layer disposed at least on an overlapping surface of the steel sheets and being in contact with one or more high strength steel sheets, wherein
   a diameter of the nugget is $4.0\sqrt{Tave}$ or more, Tave being a value obtained by dividing a total thickness in units of mm of the plurality of steel sheets by 2,
   a concentration of B atoms at a prior austenite grain boundary of the high strength steel sheet in contact with the zinc-based-plated layer at an outside of the weld is 2.0 atm% or more,
   an average effective grain size of the high strength steel sheet in contact with the zinc-based-plated layer at the outside of the weld is 7.0 $\mu$m or less, and
   an average effective grain size of the heat-affected zone of the high strength steel sheet at an outer end portion of the corona bond formed on the overlapping surface on which the zinc-based-plated layer is disposed and a circumferential edge portion of an indentation formed on a surface on which the zinc-based-plated layer is disposed is 15.0 $\mu$m or less.

2. The spot-welded joint according to Claim 1, wherein
   a diameter of the heat-affected zone as measured at the overlapping surface of the steel sheets is 1.30 times or less the diameter of the nugget.

3. A method for manufacturing a spot-welded joint, comprising:

   main energizing, in which a welding current is applied to a pair of electrodes sandwiching a plurality of stacked steel sheets, one or more of the plurality of steel sheets being a high strength steel sheet having a tensile strength of 980 MPa or more, a zinc-based-plated layer being disposed on surfaces of the one or more of the steel sheets, the zinc-based-plated layer being disposed at least on an overlapping surface of the steel sheets, and the zinc-based-plated layer being in contact with the one or more high strength steel sheets; and
   retaining a pressurizing force on the steel sheet by the pair of electrodes in a state where energization to the pair of electrodes is stopped, wherein
   a concentration of B atoms at a prior austenite grain boundary of the high strength steel sheet in contact with the zinc-based-plated layer is 2.0 atm% or more,
   an average effective grain size of the high strength steel sheet in contact with the zinc-based-plated layer is 7.0 $\mu$m or less, and
   Formulas 1, 2, and 3 are satisfied:

$$0.13 \times \text{Tave} \leq \text{tw} \leq 0.17 \times \text{Tave} \quad (\text{Formula 1})$$

$$1.90 \leq Iw \times tw \leq 2.24 \quad \text{(Formula 2)}$$

$$2400 \times Tave \leq Pw \quad \text{(Formula 3)}$$

where Tave is a value obtained by dividing a total thickness in units of mm of the plurality of steel sheets by 2,
tw is an energizing time in units of s in the main energizing,
Iw is a welding current value in units of kA in the main energizing, and
Pw is a pressurizing force in units of N in the main energizing.

4. The method for manufacturing a spot-welded joint according to Claim 3, wherein

a retention time th during retaining satisfies Formula 4:

$$0.08 \times Tave^2 \leq th \leq 0.42 \times Tave^2 \quad \text{(Formula 4)}$$

where th is a retention time during retaining, and
Tave is a value obtained by dividing the total thickness in units of mm of the plurality of steel sheets by 2.

5. The method for manufacturing a spot-welded joint according to Claim 3 or 4, wherein the main energizing is pulse energizing.

6. A vehicle component comprising the spot-welded joint according to Claim 1 or 2.

FIG. 1A

FIG. 1B

## FIG. 1C

## FIG. 2

# FIG. 3

# FIG. 4A

FIG. 4B

FIG. 5

## INTERNATIONAL SEARCH REPORT

| International application No. |
|---|
| **PCT/JP2023/045036** |

| A. | CLASSIFICATION OF SUBJECT MATTER |
|---|---|

*B23K 11/16*(2006.01)i; *B23K 11/11*(2006.01)i
FI: B23K11/16 311; B23K11/11 540

According to International Patent Classification (IPC) or to both national classification and IPC

| B. | FIELDS SEARCHED |
|---|---|

Minimum documentation searched (classification system followed by classification symbols)

B23K11/16; B23K11/11

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2021-169114 A (KABUSHIKI KAISHA KOBE SEIKO SHO) 28 October 2021 (2021-10-28) <br> entire text, all drawings | 1-6 |
| A | JP 2020-11253 A (NIPPON STEEL CORPORATION) 23 January 2020 (2020-01-23) <br> entire text, all drawings | 1-6 |
| A | JP 2018-39019 A (NIPPON STEEL & SUMITOMO METAL CORPORATION) 15 March 2018 (2018-03-15) <br> entire text, all drawings | 1-6 |
| A | JP 2017-47476 A (NIPPON STEEL & SUMITOMO METAL CORPORATION) 09 March 2017 (2017-03-09) <br> entire text, all drawings | 1-6 |
| A | JP 2003-164975 A (KAWASAKI STEEL CORP.) 10 June 2003 (2003-06-10) <br> entire text, all drawings | 1-6 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

International application No.

**PCT/JP2023/045036**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022/215103 A1 (NIPPON STEEL CORPORATION) 13 October 2022 (2022-10-13) entire text, all drawings | 1-6 |

Form PCT/ISA/210 (second sheet) (July 2022)

INTERNATIONAL SEARCH REPORT
Information on patent family members

International application No.

**PCT/JP2023/045036**

| Patent document cited in search report | | | Publication date (day/month/year) | Patent family member(s) | | | Publication date (day/month/year) |
|---|---|---|---|---|---|---|---|
| JP | 2021-169114 | A | 28 October 2021 | US | 2023/0201949 | A1 | |
| | | | | entire text, all drawings | | | |
| | | | | WO | 2021/210303 | A1 | |
| | | | | EP | 4119276 | A1 | |
| | | | | KR | 10-2022-0140008 | A | |
| | | | | CN | 115379916 | A | |
| JP | 2020-11253 | A | 23 January 2020 | (Family: none) | | | |
| JP | 2018-39019 | A | 15 March 2018 | (Family: none) | | | |
| JP | 2017-47476 | A | 09 March 2017 | US | 2018/0243853 | A1 | |
| | | | | entire text, all drawings | | | |
| | | | | WO | 2017/038981 | A1 | |
| | | | | EP | 3345711 | A1 | |
| | | | | KR | 10-2018-0034561 | A | |
| | | | | CN | 108025387 | A | |
| JP | 2003-164975 | A | 10 June 2003 | (Family: none) | | | |
| WO | 2022/215103 | A1 | 13 October 2022 | (Family: none) | | | |

Form PCT/ISA/210 (patent family annex) (July 2022)

27

**REFERENCES CITED IN THE DESCRIPTION**

**Patent documents cited in the description**

- JP 2022206636 A
- JP 2009228079 A
- WO 2020162561 A
- WO 2021019947 A
- JP 2020179413 A

**Non-patent literature cited in the description**

- *METALLURGICAL AND MATERIALS TRANSACTIONS A*, vol. 45A, 1877-1888